(19) **Europäisches Patentamt**
**European Patent Office**
**Office européen des brevets**

(11) **EP 4 455 941 A1**

(12) # EUROPÄISCHE PATENTANMELDUNG

(43) Veröffentlichungstag:
**30.10.2024 Patentblatt 2024/44**

(21) Anmeldenummer: **23170119.4**

(22) Anmeldetag: **26.04.2023**

(51) Internationale Patentklassifikation (IPC):
**G06N 3/0464** (2023.01) **G06N 5/025** (2023.01)
**G06N 5/045** (2023.01) **G06N 20/20** (2019.01)

(52) Gemeinsame Patentklassifikation (CPC):
**G06N 20/20; G06N 5/045;** G06N 3/0464;
G06N 5/025

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **Büttner, Florian**
  **81541 München (DE)**
• **Gross, Ralf**
  **90471 Nürnberg (DE)**
• **Köbler, Alexander**
  **90461 Nürnberg (DE)**
• **Thon, Ingo**
  **85630 Grasbrunn (DE)**

(74) Vertreter: **Siemens Patent Attorneys**
**Postfach 22 16 34**
**80506 München (DE)**

(54) **MASCHINENGEFÜHRTES EXPERTENSYSTEM FÜR EIN TECHNISCHES SYSTEM, VERFAHREN, VORRICHTUNG UND COMPUTERPROGRAMMPRODUKT**

(57) Die Erfindung betrifft ein Vorhersagesystem für ein technisches System, wie es insbesondere in der Wartung einer Anlage oder bei der optischen Inspektion von Objekten in der Produktion bereits Anwendung findet.

Ein maschinelles Lernmodell wird verwendet, um die Entdeckung neuer interpretierbarer Regeln zu leiten und diese Regeln in Verbindung mit dem leitenden Modell anzuwenden. Im Gegensatz zu bestehenden Lösungen ermöglicht das System, vorhandenes Wissen explizit einzubeziehen und den Kompromiss zwischen Interpretierbarkeit und erforderlicher Leistung anzupassen, während neue Regeln gefunden werden.

Domänenexperten wird es ermöglicht, datengesteuertes maschinelles Lernen zu nutzen, indem sie weiterhin ihr Wissen explizit in das System einbeziehen können. Dabei gleicht das System Expertenregeln mit empirischen Beobachtungen ab und bietet analytische Einblicke in den realen Datengenerierungsprozess. Gleichzeitig werden die Benutzer in die Lage versetzt, die Interpretierbarkeit und Leistung des Systems präzise zu steuern, ohne ein breites Verständnis der verschiedenen KI-Systeme und des bei durch sie implizit abgebildeten Kompromisses zwischen Interpretierbarkeit und prädiktiver Performanz zu benötigen.

FIG 4

**Beschreibung**

Die Erfindung betrifft ein Vorhersagesystem für ein technisches System, wie es insbesondere in der Wartung einer Anlage oder bei der optischen Inspektion von Objekten in der Produktion bereits Anwendung findet.

Künstliche Intelligenz (KI) und insbesondere Verfahren des Maschinellen Lernens (Machine Learning, ML) erfahren aktuell einen gewaltigen Aufschwung und halten zunehmend Einzug in vielen Bereichen, beispielsweise in allen Ebenen der Produktion auf dem Shopfloor. In vielen dieser Anwendungen, wie der Zustandsüberwachung von Maschinen (z. B. für Antriebsstränge, Lager, Pressen und dergleichen), der vorausschauenden Wartung der Einrichtungen oder der visuellen Qualitätsprüfung von hergestellten Produkten, stehen datengesteuerte Ansätze jedoch vor einigen Herausforderungen, die die weit verbreitete Substitution von Expertensystemen durch ML-basierte Systeme verzögern. Dies ist der Fall, obwohl ML-basierte Systeme ein großes Potenzial haben, die bestehenden Systeme in Bezug auf die prädiktive Performanz zu übertreffen.

In einem Expertsystem oder wissensbasierten System fungiert eine Wissensbasis (engl. knowledge base) als Bereich des Systems, der das Fachwissen zu einem bestimmten Fachgebiet in einer beliebigen Repräsentationsform (beispielsweise Regelbasiert, Fallbasiert, oder mittels Entscheidungsbaum) enthält. Ergänzt wird die Wissensbasis durch eine Inferenzmaschine, also eine Software, mit der auf der Wissensbasis operiert werden kann.

Die hemmenden Faktoren für die breite Anwendung von MLbasierten Systemen auf dem sogenannten Shopfloor (dem Ort der tatsächlichen Produktion) lassen sich in zwei Hauptproblemen zusammenfassen, nämlich dem Mangel an ausreichenden Daten, beispielsweise zum Trainieren, und dem mangelnden Vertrauen in die rein datenbasierten Systeme.

In vielen Anwendungen tritt ein zu überwachendes Ereignis innerhalb eines langen Zeitraums nur sehr selten auf, beispielsweise ein Schadenfall an einer überwachten Maschine. Dies macht es nicht möglich, eine ausreichende Anzahl von Beispielen im Trainingsdatensatz zu sammeln, um alle möglicherweise auftretenden Umstände für die vorliegende Anwendung und Aufgabe abzudecken. Dies ist nicht nur ein Problem für das Training, sondern auch für das Testen dieser Systeme, da nicht alle möglicherweise vorkommenden Fälle in Testszenarien abgedeckt werden können.

Das Fehlen von Trainingsdaten kann zu unerwartetem Verhalten für zuvor ungesehene Daten führen, und das Fehlen von Testdaten verhindert es diese Fälle zu finden. Der Black-Box-Charakter vieler Ansätze des maschinellen Lernens hindert Benutzer, die zumeist häufig Experten in der Domäne sind, daran, die Schlussfolgerungen des Modells mit ihrem Wissen abzugleichen und Beobachtungen möglicherweise auf geänderte Umstände zu verallgemeinern. Diese Gründe führen zu einem Mangel an Vertrauen bei den Personen, die für den Einsatz dieser Systeme beispielsweise in der Fertigung verantwortlich sind.

Für viele Anwendungsfälle gibt es allgemeingültiges Wissen über die zu lösende Aufgabe, wie z. B. Muster in den Daten oder Systemeigenschaften, die auf eine bestimmte Ausgabe oder einen bestimmten Zustand des beobachteten Systems hinweisen. Dieses Wissen kann in zahlreichen Arten und mit unterschiedlicher Genauigkeit dargestellt werden. Mögliche Wissensquellen, die in Betracht kommen, sind Heuristiken in den Köpfen von Experten, Grundlagenwissen in der Literatur sowie gründlich formulierte Regeln in bestehenden regelbasierten (Experten-) Systemen.

Im Rahmen einer viel betrachteten Anwendung in der Zustandsüberwachung, beispielsweise der Fehlererkennung in einem Lager eines Motors, kann dieses Wissen etwa durch wichtige Kennfrequenzen, die auf einen Lagerschaden hindeuten, gegeben sein. Diese Frequenzen werden durch bekannte Formeln in Kombination mit anlagenspezifischen Informationen über den verwendeten Lagertyp in der jeweiligen Anwendung ermittelt, wobei das Wissen aus Literatur und von Experten über die spezielle Anwendung kombiniert wird. Darüber hinaus können auch anlagenspezifische Fehlermuster, die rein durch frühere Beobachtungen von Domänenexperten beschrieben wurden, verwendet und in das System einbezogen werden.

Stand der Technik

Die meisten aktuellen KI-Systeme verlassen sich entweder ausschließlich auf datenbasierende oder auf, auf Expertenregeln basierende Ansätze.

Wenn es Domänenwissen gibt, das explizit in maschinellen Lernsystemen genutzt wird, wird es zumeist bereits bei der Vorverarbeitung der Daten für die Verarbeitung in den Maschinenlern-Algorithmen integriert, dem sogenannten Feature-Engineering-Schritt. Mit Physics-Informed ML und Neuro-symbolische KI gibt es jedoch auch Ansätze, die versuchen, das Wissen über allgemeine physikalische Zusammenhänge oder das spezielle beobachtete System in das Lernziel eines Machine-Learning-Modells zu integrieren.

Sogenannte Physics-Informed ML neuronale Netze (PINNs) sind eine Art universelle Funktionsapproximatoren, die das Wissen überphysikalischen Gesetze, die einen gegebenen Datensatz bestimmen, in den Lernprozess einbetten. Sie sind in der Lage, die geringe Datenverfügbarkeit in manchen technischen Anwendungen zu überwinden, die dazu führt, dass die meisten modernen Verfahren des maschinellen Lernens nicht robust genug sind, und daher für den Gebrauch in diesen Fällen nicht geeignet. Das Vorwissen über allgemeine physikalische Gesetze wirkt beim Training neuronaler Netze (NN) als Regulierungsmittel, das den Raum zulässiger Lösungen begrenzt und die physikalische Korrektheit der Funktionsannäherung erhöht. Die Einbettung von Vorabinformationen in ein neuronales Netz erleichtert es dem Lernalgorithmus die richtige Lösung zu finden und selbst bei einer geringen Anzahl von Trainingsbeispielen gut zu verallgemeinern.

Neuro-symbolische KI integriert neuronale und symbolische KI-Ansätze, um die sich ergänzenden Stärken und Schwächen der beiden zu berücksichtigen und eine robuste KI zu schaffen.

Diese Ansätze treffen starke Annahmen über die Qualität und Formalisierung des verfügbaren Domänenwissens, d. h. es muss beispielsweise in Form von Differentialgleichungen oder strengen logischen Regeln verfügbar sein. In praktischen Anwendungsbereichen, die von Domänenexperten vorangetrieben werden, ist Wissen jedoch oft eher als Heuristik und Evidenzwissen verfügbar, das verrauscht und nur für einen Teil des Eingaberaums gültig ist und daher für diese Ansätze nicht ausreicht.

Die Integration des Wissens in das Lernziel, wie es z. B. bei dem "Physics-Informed" maschinellen Lernen erfolgt, hat nur einen begrenzten Effekt auf die Verringerung der Undurchsichtigkeit des Ergebnis-Findungsprozess des trainierten Systems. Die darauf basierenden Systeme sind nur in einem sehr begrenzten Maß besser interpretierbar und robuster als reguläre Black-Box-Ansätze für maschinelles Lernen.

Die Verwendung von Feature-Engineering, um datengesteuerte Ansätze für hochdimensionale Daten wirklich interpretierbar zu machen, erfordert eine starke Reduzierung der in den Eingabedaten enthaltenen Informationen, was zu einem Verlust der erzielbaren prädiktiven Performanz führen kann. Darüber hinaus ist ein Kompromiss zwischen Interpretierbarkeit, Generalisierbarkeit und Leistungsfähigkeit des Modells oft nur implizit und hängt von der Verfügbarkeit und Entdeckung ausreichender Merkmale ab. Das macht es schwierig, mit unvollständigem Wissen über relevante Merkmale umzugehen. Regelbasierte Machine-Learning-Ansätze wie lernende Klassifikatorsysteme (engl. Learning Classifier System) oder Assoziationsregellernen versuchen, interpretierbare Regelsätze basierend auf den beobachteten Daten zu finden. Diese Ansätze berücksichtigen die Integration von vorhandenem Domänenwissen, z. B. in Form von Expertenregeln oder Heuristiken, nicht. Darüber hinaus ist die globale prädiktive Performanz von Regellernansätzen durch das Vorhandensein von Regeln mit begrenzter Komplexität, die den gesamten Eingaberaum abdecken, beschränkt.

Es ist daher Aufgabe der Erfindung, ein Verfahren und eine Vorrichtung anzugeben, welche eine verbesserte Vorhersageleistung, Interpretierbarkeit und Robustheit gegenüber den oben diskutieren Ansätzen bietet.

Dabei soll die Möglichkeit bestehen, Expertenwissen einzubeziehen und Unsicherheiten in den Expertenregeln und Heuristiken zu berücksichtigen.

Die Aufgabe wird gelöst durch eine Vorrichtung gemäß den Merkmalen des Patentanspruch 1.

Die Aufgabe wird gelöst durch ein Verfahren gemäß den Merkmalen des unabhängigen Patentanspruchs 10 und durch ein Computerprogrammprodukt, geeignet und ausgebildet zur Durchführung der Schritte des Verfahrens.

Es wird eine direkte Zusammenarbeit zwischen einem regelbasierten und einem datenbasierten System in Kombination mit der Verwendung des datenbasierten Systems zur Steuerung der Entdeckung neuer Regeln vorgeschlagen.

Weitere Aspekte und Ausführungsformen der Erfindung werden in den Unteransprüchen beschrieben.

Die vorgeschlagene Lösung weist, um die zuvor genannten Herausforderungen zu lösen, folgende Vorteile auf:

1. Gewährleistung einer vergleichbaren Vorhersageleistung wie bei rein datengetriebenen eventuell "Black-Box" Machine-Learning-Systemen.
2. Höhere Interpretierbarkeit und Robustheit als bekannte rein datengetriebenen "Black-Box"--Machine-Learning-Systeme.
3. Expertenwissen, das z. B. in herkömmlichen Systemen wie Expertensystemen verwendet wird, ist explizit einbeziehbar, so dass Benutzer ihre Schlussfolgerungen mit denen des Modells in Einklang bringen können.

Bei dem Verfahren wird die Unsicherheit in den Expertenregeln und Heuristiken berücksichtigt, was auch die Einbeziehung von "Low-Fidelity"-Wissensdarstellungen mit geringerer Genauigkeit ermöglicht. Weiterhin kann das Verfahren auch ursprünglich unvollständiges Expertenwissen verwendenden. Damit kann das Verfahrens bzw. die Vorrichtung für Anwendungen verwendet werden, in denen Expertensysteme derzeit aus oben genannten Gründen nicht anwendbar sind.

Interpretierbare Regeln werden mit einem datengetriebenen maschinellen Lernmodell für die Inferenz kombiniert, wobei das Gesamtsystem bevorzugt, interpretierbaren Regeln Anstelle des Maschinenlern-Modells zur Vorhersage der Ausgabe zu verwendet. Um die Abdeckung des Regelwerks weiter zu erhöhen und dadurch die Verwendung des Maschinenlern-Modells zu minimieren, steuert das System die Entdeckung neuer Regeln für noch nicht abgedeckte Eingabebeispiele. Der gesamte Prozess wird gesteuert, indem die prädiktive Performanz des Systems nahe an einem datenbasierten Maschinenlern-Modell gehalten wird.

Es lässt sich zusammenfassen, dass das datenbasierte, eventuell "Black-Box", Maschinenlern-Modell die Vorhersage von Eingabebeispielen unterstützt, bei denen die vorhandenen Regeln nicht ausreichen. Gleichzeitig wird die Entdeckung von Regeln in noch nicht abgedeckten Bereichen des Eingaberaums gesteuert, indem ein potenzieller Abfall der prädiktiven Performanz des Gesamtsystems begrenzt wird.

Die Erfindung wird im Weiteren durch die Ausführungsbeispiele beschrieben. Diese werden auch in den Figuren bildlich dargestellt, dabei zeigt

Figur 1     ein Anwendungsbeispiel im industriellen Umfeld

Figur 2     die schematische Darstellung des Verfahrens

Figur 3     die beispielhafte schematische Darstellung der Regelfindung für ein einfaches zweidimensionales Beispiel

Figur 4     die Detaildarstellung des Verfahrens zur Ermittlung neuer Regeln und der iterativen datengetriebenen Anpassung des Gesamtsystems aus Figur 1.

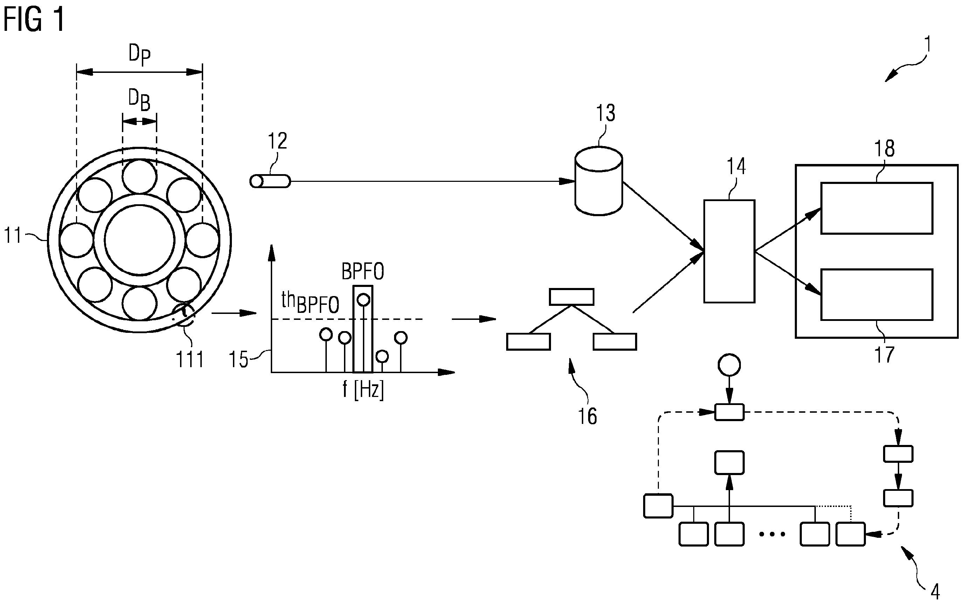

In der Figur 1 ist ein Anwendungsbeispiel der Erfindung schematisch dargestellt. Dieses stellt nur ein Ausführungsbeispiel dar, weitere Anwendungsgebiete sind denkbar, im industriellen Umfeld bei jeder Überwachung eines Verfahrens, der Wartungskontrolle einer Maschine oder beispielsweise auch der Qualitätssicherung von Produkten in einer Produktion, wo für ein Expertensystem nicht ausreichend Regeln vorhanden sind und ein herkömmliches rein datenbasiertes "Black-Box"-ML-System alleine nicht geeignet ist.

Anwendungsbeispiel: Erkennung von Lagerfehlern:

Die Klassifizierung von Lagerfehlern ist eine sehr relevante Anwendung, da diese Art von Bauteilen nahezu überall in einer industriellen Anlage verbaut ist und ein Ausfall eines Lagers in der Regel einen größeren Ausfall zumindest von Teilen der Anlage und Produktionsausfall bewirkt. Daher werden diese Bauteile in der Regel überwacht und nach einem Wartungsplan ausgetauscht, um Ausfälle zu verhindern. Es gibt eine Vielzahl von Literatur und Expertenwissen, die Heuristiken definieren, die versuchen, die Aufgabe der frühzeitigen Schadenserkennung als Klassifikationsaufgabe durch Unterscheidung zwischen gesunden und beschädigten Lagerzuständen zu behandeln. Diese Informationen können anschließend genutzt werden, um die Wartung und Instandhaltung effizient zu planen.

Zu den erfolgreichsten Methoden zur Detektion von Lagerschäden gehört die Ermittlung von charakteristischen Kennfrequenzen für auftretende Schäden in gemessenen Schwingungssignalen. Um eine Frequenzdarstellung der aufgezeichneten Schwingungssignale zu erhalten, wird üblicherweise eine Fast Fourier-Transformation (FFT) verwendet.

Die charakteristischen Frequenzen existieren für verschiedene Teile eines überwachten Lagers und basieren auf der Geometrie des Lagers. Die Frequenzen in Kombination mit anlagenspezifischen Schwellenwerten für die erwartete Amplitude bieten Heuristiken zur Klassifizierung von Lagerschäden für eine spezifische Anwendung.

Figur 1 zeigt einen beispielhaften Aufbau zur Verwendung der vorgeschlagenen Erfindung zur Lagerfehlererkennung. Hier bestehen die Trainingsdaten aus rohen Zeitreihensignalen, die mit einem Schwingungssensor 12 aufgezeichnet wurden, der in der Nähe des überwachten Lagers 11 montiert ist. Zusätzlich ist eine Start-Expertenregel 16 zur Erkennung eines Fehlers auf der äußeren Laufstrecke 111 des Lagers in das Modell integriert. Es gibt zahlreiche weitere mögliche Fehlermuster, die in diesem Fall durch zu entdeckende Regeln oder das datenbasierten Black-Box Systems abgedeckt werden.

Die hier verwendete Start-Regel (auch Seed-Regel genannt) ist definiert in dem Spektrum 15, das aus dem rohen Zeitreihensignal erzeugt wird. Dabei wird die relevante Frequenz anhand der Lagergeometrie laut Literatur beispielsweise berechnet:

$$BPFO = \frac{n \cdot f_r}{2} \cdot \left( 1 - \frac{D_B}{D_P} \cdot \cos \phi \right)$$

wobei

    $n$ die Anzahl der Kugeln im Lager,
    $D_B$ der Durchmesser der Kugeln,
    $D_P$ der mittlere Durchmesser des Lagers und
    $\varphi$ der Lagerkontaktwinkel ist.

Alle diese benötigten Parameter in dem vorgestellten Beispiel können bereits ohne weitere Untersuchungen durch die Kenntnis des Lagertyps und des Herstellers bestimmt werden.

Die Drehzahl $f_r$ der Maschine als weiterer Parameter kann zusätzlich gemessen, aus dem Spektrum abgeschätzt oder extern von der Anwendung (wie einer Steuerungssoftware einer Anlage, oder eines Motors, an dem das Lager verbaut ist) bereitgestellt werden.

Die hier spezifizierte Regel lautet:
Einen Defekt des Lagers liegt vor, wenn die folgende Bedingung erfüllt ist:

$$A(BPFO) > th_{BPFO} \text{ ,}$$

wobei $A(BPFO)$ die Amplitude der BPFO-Frequenzkomponente bezeichnet und $th_{BPFO}$ ein von einem Menschen definierter Schwellenwert ist, der zwischen einem guten und einem schlechten Lagerzustand unterscheidet.

Die Ausgabe des Klassifizierungssystems 14, welches nach dem iterativen Verfahren 4 zur Optimierung und Regelfindung gefunden wurde, kann dann als Eingabe für ein Wartungsplanungssystem 18 verwendet werden, um den optimalen Zeitpunkt für den Austausch oder die Reparatur des überwachten Lagers zu bestimmen.

Um die Schlussfolgerungen des trainierten Systems den Domänenexperten in geeigneter Weise zu präsentieren, kann eine Erklärungsschnittstelle (HMI) 17 verwendet werden, die ausgewählten Daten oder Signale in Kombination mit den darauf angewendeten Regeln darstellt. Dies ermöglicht es den Experten, ihre persönlichen Schlussfolgerungen mit den Ergebnissen des Modells abzugleichen und Vertrauen in die Vorhersagen des Systems aufzubauen.

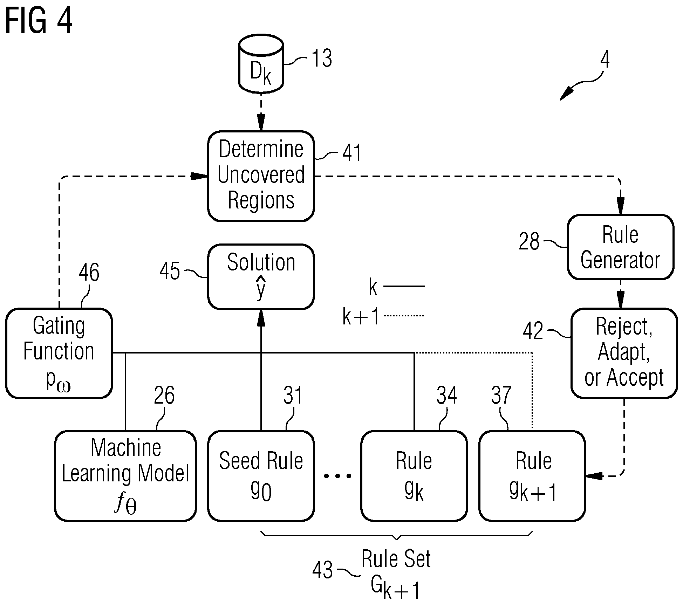

Das System zur Optimierung und Regelfindung 4 wird in Figur 4 konzeptuell detaillierter dargestellt.

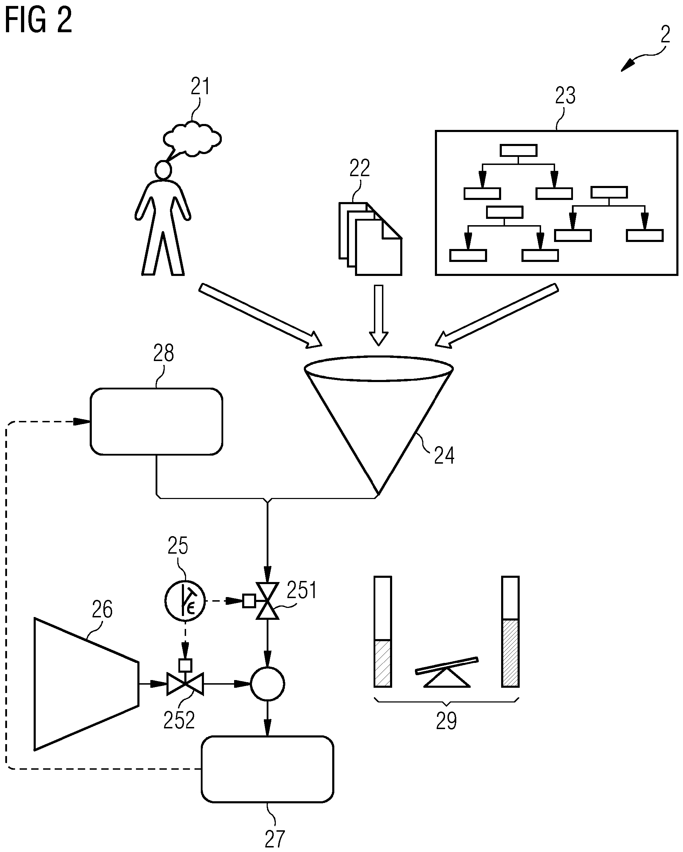

Zunächst sehen wir eine schematische Darstellung des abstrakten Konzepts in Figur 2 und teilweise auch in Figur 4. Es kann initialisiert werden, indem Start-Regeln (Seed-Regeln) 31 gespeichert sind, die Vorwissen über die Aufgabe enthalten können, beispielsweise in Form von interpretierbarem Expertenwissen, 24. Die Seed-Regeln können aus verschiedenen Quellen stammen, z. B. von Domänenexperten 21, bereits vorhandenen Expertensystemen 23 oder aus Wissensdatenbanken, der allgemeinen oder Fach-Literatur 22.

Durch die Anpassung eines dedizierten Hyperparameters (das sind Parameter eines Machine Learning Algorithmus, die nicht direkt durch die Trainingsdaten angepasst werden bzw. vor dem Training gesetzt werden, $\varepsilon$) kann der Kompromiss 29 zwischen der Interpretierbarkeit und der prädiktiven Performanz des Modells explizit angepasst werden (Grey-box System), indem eine Gewichtung eingestellt wird 25. Dieser Parameter legt eine Grenze für den Verlust der prädiktiven Performanz fest, wenn die interpretierbaren Regeln anstelle des datenbasierten Modells 26 verwendet werden. Das Gesamtsystem ist so konzipiert, dass die Anzahl der Eingabebeispiele, die von Regeln abgedeckt werden, maximiert wird. Dies geschieht, indem die Anzahl der Fälle, in denen man sich auf das datenbasierte Modell- 26 verlässt, reduziert wird und zusätzlich neue Regeln gefunden werden 28, ohne die Voreinstellung für die prädiktive Performanz des resultierenden Grey-Box-Gesamtsystems 27 zu verletzen.

Vorgeschlagener Ansatz:

Das Training des Systems und die Generierung neuer Regeln können als alternierender iterativer Prozess betrachtet werden, wie in Figur 4 dargestellt. Das initialisierte System besteht aus einem initialen Trainingsdatensatz

$$(x, y) \sim D_0$$

inklusive Eingabe Datenpunkte x und entsprechende Beschriftungen (Label) y,
ein Zuweisungsmodell $p_\omega$, 46
ein datenbasiertes Modell $f_\theta$ (z. B. ein neuronales Netzwerk) (26) und $N_0$ Seed-Regeln im Regelsatz

$$G_0 = \{g_1, g_2, ..., g_{N_0}\} = \bigcup_{i=1}^{N_0} g_i$$

Darüber hinaus gibt es eine Regelfindungsprozedur 28, die Regeln $g_i : X \rightarrow Y$ für eine Teilmenge der Eingabedaten $D_k^r \subseteq D_k$ generiert.

Diese generierten Regeln können akzeptiert, angepasst oder abgelehnt werden, 42.

Die Vorhersage des Systems in Schritt k bei gegebener Eingabe x ergibt:

$$\widehat{y}_{\omega_k,\theta_k}(x) = p_{0,\omega_k}(x)f_{\theta_k}(x) + \sum_{i=1} p_{i,\omega_k}(x)g_i(x)$$

Während der Inferenz kann eine harte oder weiche Zuweisung verwendet werden. Für eine harte Zuweisung ist $\boldsymbol{p}_{\omega k}$ "one-hot" enkodiert. Das bedeutet, dass nur das Element j in dem Vektor der Länge ($N_k$ + 1) 1 ist und alle anderen 0, wobei $N_k$ die Anzahl an vorhandenen Regeln im Schritt k ist und j wie folgt ermittelt wird:

$$j = \underset{i}{\arg\max}\, p_{i,\omega_k}.$$

Eine "one-hot"-Zuweisung kann die Interpretierbarkeit der Ergebnisse erhöhen, so dass die Ausgabe nur von einer einzigen Regel $g_j$ oder dem datenbasierten Modell $f_{\theta k}$ abhängt. Die Aufhebung dieser Einschränkung kann jedoch in einigen Fällen die Vorhersageleistung erhöhen. Darüber hinaus können die Gewichtungen für die Regeln je nach Realisierung des Zuweisungsmodells ein wertvoller Hinweis auf die Übereinstimmung von Regeln mit spezifischen Beispielen und deren allgemeine Plausibilität sein und eine weitere Interpretationsdimension für analytisch interessierte Domänenexperten bieten.

Der Anpassungsprozeß für das gesamte System besteht aus den folgenden Schritten:

1. Schritt: Ein reguläres, uneingeschränktes Optimierungsziel, das die Differenz zwischen der vorhergesagten Ausgabe $\hat{y}_{\omega,\theta}(x)$ und dem Ground-Truth-Label y minimiert, wird verwendet, um das datenbasierte Modell (26) und das Zuweisungsmodell (46) gleichzeitig anzupassen:

$$\min_{\omega_k,\theta_k} \sum_{(x,y) \in D_k} l(y, \widehat{y}_{\omega_k,\theta_k}(x))$$

Das Optimierungsverfahren liefert die Parameter $\hat{\omega}_k$ und $\hat{\theta}_k$

2. Schritt: Die prädiktive Performanz des uneingeschränkten Modells wird bestimmt und dient als Richtschnur für die nächsten Schritte:

$$\widehat{\mathcal{L}}_k = \sum_{(x,y) \in D_k} l(y, \widehat{y}_{\hat{\omega}_k,\hat{\theta}_k}(x))$$

3. Schritt: Ein zusätzlicher eingeschränkter Optimierungsschritt wird verwendet, um die Anwendung des datenbasierten Modells $f_{\theta k}$ zu minimieren und dadurch die Verwendung der Regeln zu maximieren:

$$\min_{\omega_k, \theta_k} p_{0, \omega_k}(x)$$

$$s.t. \quad \hat{\mathcal{L}}_k > (1 - \epsilon) \cdot \sum_{(x,y) \in D_k} l(y, \hat{y}_{\omega_k, \theta_k}(x))$$

Wobei $\varepsilon \geq 1$ ein Hyperparameter ist, der in Figur 2 als Hebel dargestellt ist, um den Kompromiss zwischen Regelabdeckung und damit Interpretierbarkeit des Gesamtsystems (Graugrad) und der Leistung des gesamten Systems anzupassen.

4. Schritt: Ermittlung von einem noch nicht durch Regeln abgedeckten Satz von Eingabebeispielen und Ermittlung einer Regel für noch nicht abgedeckte Bereiche im Eingaberaum, z. B. mithilfe eines Entscheidungsbaums:

$$D_k^r = \{(x,y) | p_{0, \omega_k}(x) > \tau\}$$

wobei $\tau$ ein voreingestellter Schwellenwert ist, der bestimmt, ob eine Stichprobe durch das datenbasierte Modell oder eine der Regeln abgedeckt ist.

Die neu entdeckte Regel kann über eine Benutzerschnittstelle oder voreingestellte Akzeptanzkriterien, z. B. minimale Abdeckung, abgelehnt, angepasst oder akzeptiert werden.

Wenn die Regel akzeptiert wird, wird sie an den Regelsatz angehängt:

$$G_{k+1} = G_k \cup \{g_{N_{k+1}}\}$$

Die Schritte 3 und 4 werden wiederholt, bis eines der Abbruchkriterien erreicht ist:

- Maximale Anzahl von Iterationen wird erreicht $k = K_{max}$
- Ein vorher festgelegter Mindestzugewinn an Abdeckung von Datenpunkten durch die neue Regel wird unterschritten

$$\frac{1}{|D_k|} \cdot \sum_{x \in D_k} g_k(x) < C_{min}$$

- Der Regelermittlungsalgorithmus konvergiert nicht zu einer interpretierbaren Regel
- Der Prozess wird manuell gestoppt

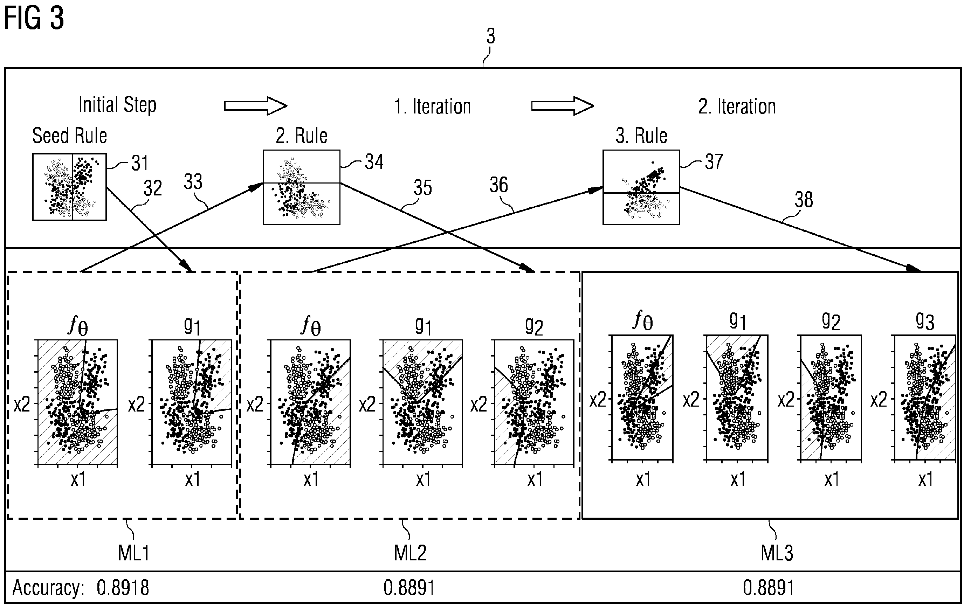

Ein einfaches Beispiel zur Verdeutlichung der Methode zeigt Figur 3: der Aufbau des Entscheidungsprozesses anhand eines Beispiels für eine binäre 2D-Klassifizierung in zwei Iterationen. Die Punkte stellen dabei mögliche Eingangsbeispiele im 2D-Raum dar. Die Skalen x1 und x2 bezeichnen die beiden Eingangsdimensionen.

Der Regelsatz wird mit einer Ausgangsregel (Seed Rule) 31 initialisiert, 32 und in den nächsten beiden Iterationen um zwei jeweils neu generierte Regeln 34, 37 für nicht abgedeckte Bereiche erweitert. In den Kästen f g1, g2, g3 ist der jeweils schraffierte Bereich derjenige Teil der durch eine Regel bzw. das datenbasiertes System abgebildet ist. Der erste Kasten stellt das datenbasierte Modell in diesem Fall einen ML-basierter Klassifikator dar, der zweite die Seed-Rule, und die Kästen g2 und g3 die durch die Iterationen 1 und 2 generierten Regeln. Die neuen Regeln werden beispielsweise mit Hilfe eines Entscheidungsbaums der Tiefe d=1 abgeleitet.

Durch Ermittlung der noch durch den ML-basierter Klassifikator abgedeckten Bereiche 33, 36 werden nach Schritt 4 die für die Regelfindung in 34, 37 notwendigen Sub-Sätze an Eingangsdaten ermittelt. Anschließend werden die Regeln 34, 37 in ihren jeweiligen Schritten in das Gesamtsystem integriert 35, 38 indem sie dem Regelsatz angehängt werden.

Nach der zweiten Iteration ML 3 muss nur noch ein sehr kleiner Teil des Eingaberaums durch den ML-basierter Klassifikator $f_\theta$ abgedeckt werden, wie man an der kleiner werdenden schraffierten Fläche in dem Kasten erkennen kann. Der Rest des Eingaberaums wird durch eine der interpretierbaren Regeln klassifiziert. Dies ermöglicht es einem Großteil der Eingabebeispiele, die Klassifizierung anhand der angewendeten Regel zu interpretieren. Wenn das Zuweisungsmodell so gewählt wird, dass sie selbst interpretierbar ist, kann der Entscheidungsprozess des Systems auf ein globales hierarchisches Regelwerk abgebildet werden, das eine ganzheitliche Beschreibung des Entscheidungsprozesses des Systems ermöglicht. Selbst wenn dies nicht der Fall ist, bieten die lokalen Erklärungen, die durch die angewendete Regel gegeben werden, wertvolle Erkenntnisse für Domänenexperten, um die Entscheidung des Systems mit ihrem Domänenwissen in Einklang zu bringen und die Argumentation des Systems über bekannte Beispiele hinaus zu verallgemeinern, z.B. wird $g_3$ auch auf neue Beispiele im vierten Quadranten angewendet. Der gesamte Prozess, die Schlussfolgerung des Systems verständlich zu machen, hat nur einen vernachlässigbaren Einfluss auf die Genauigkeit des Systems, in diesem Fall einen Genauigkeitsabfall von 0,27%.

Die Verfügbarkeit von Expertenheuristiken in Kombination mit der mangelnden Vorhersagegenauigkeit bei alleiniger Abhängigkeit machen die Aufgabe der Lagerfehlererkennung zu einem geeigneten Beispiel für unseren Ansatz. Diese Einstellung ist jedoch kein seltenes Szenario und daher möchten wir die breite Anwendbarkeit unserer Erfindung betonen.

Ein großer Vorteil der Verwendung von Regeln während der Inferenz in Bezug auf Interpretierbarkeit und Wissensausrichtung besteht darin, dass die Regeln nicht in der Eingabedomäne angewendet werden müssen, sondern auch einen manuell entworfenen oder erlernten Merkmalsraum verwenden können, der für Domänenexperten besser interpretierbar ist. Wie beschrieben, kann dies für die Lagerfehlererkennung auf der Grundlage von Schwingungsdaten durch einen Merkmalsraum gegeben werden, der die Amplitude der charakteristischen Frequenz aus dem Spektrum extrahiert, wie in Abbildung 4 gezeigt, aber dieser Raum könnte auch einige aggregierte Merkmale wie den RMS-Wert enthalten.

Optische Qualitätskontrolle:

Eine weiteres geeignetes Ausführungsbeispiel ist die Automatische Optische Inspektion (AOI) am Ende einer Produktionslinie. Bestehende AOI-Systeme verwenden ein Kamerasystem und manuell definierte Regeln, die auf Pixelunterschieden oder Informationen basieren, die von einem Kantendetektor abgerufen werden, um Funktions- aber auch Qualitätsmängel an produzierten Produkten zu erkennen.

Im Beispiel der optischen Inspektion von Leiterplatten kann ein solcher Defekt durch das Fehlen eines bestimmten Bauteils gegeben sein, durch das Vorhandensein eines falschen Bauteils oder auch durch die falsche Position des Bauteils. Um diesen Fall zu erkennen, kann jeweils eine Regel definiert werden, die auf den zu erwartenden Pixelwerten im Bereich des Objekts basiert. Außerdem kann bei diesem oder anderen Fehlern auch der Abstand zwischen zwei Kanten für die Regel herangezogen werden. Ähnlich wie bei der FFT zur Lagerfehlererkennung kann hier der Kantendetektor als Teil der Regel betrachtet werden, der es ermöglicht, Regeln in einem für menschliche Experten informativeren Bereich auf der Grundlage tatsächlicher physikalischer Maßnahmen zu definieren. Die Abstände zwischen verschiedenen Kanten lassen sich oft direkt aus Informationen über das Produkt ableiten.

Diese Regeln für alle möglichen Fehler zu definieren, insbesondere wenn eine große Anzahl unterschiedlicher Produkte hergestellt wird, ist jedoch sehr mühsam. Aufgrund der hohen Variation der Erscheinungsformen von Fehlern, die in einem Produktionssystem auftreten, wird die Aufgabe, alle Muster manuell zu definieren, sogar unmöglich. Zudem erfordert jede Änderung im System auch eine sofortige Anpassung der Regeln.

Mit dem hier vorgeschlagenen System und dem Verfahren können die bestehenden Regeln genutzt werden, und ihre Unvollständigkeit kann durch ein rein datenbasiertes System kompensiert werden, das insbesondere für Bildverarbeitungsanwendungen geeignet ist, z. B. ein Convolutional Neural Network (CNN), um neue Regeln zu finden und die Vorhersage zu unterstützen, wo interpretierbare Regeln entdeckt werden können.

Machine-Learning-Modelle für Bildverarbeitungs-Anwendungen haben in den letzten Jahren ihr großes Potenzial in Bezug auf die Vorhersageleistung in solchen Anwendungen unter Beweis gestellt. Ihr Black-Box-Charakter und ihre mangelnde Robustheit gegenüber kleinen Abweichungen in den Bildern behindern jedoch ihre weit verbreiteten Anwendungen. In Kombination mit dem vorgeschlagenen Verfahren können diese beiden Faktoren reduziert werden.

Ein maschinelles Lernmodell wird verwendet, um die Entdeckung neuer interpretierbarer Regeln her zu leiten und diese Regeln in Verbindung mit dem leitenden Modell anzuwenden. Im Gegensatz zu bestehenden Lösungen ermöglicht das System, vorhandenes Wissen explizit einzubeziehen und den Kompromiss zwischen Interpretierbarkeit und erforderlicher prädiktiver Performanz anzupassen.

Domänenexperten wird es ermöglicht, datengesteuertes maschinelles Lernen zu nutzen, wobei sie jedoch weiterhin ihr Wissen explizit in das System einbeziehen können. Dabei gleicht das System Expertenregeln mit empirischen Beobachtungen ab und bietet analytische Einblicke in den realen Datengenerierungsprozess. Gleichzeitig werden die Benutzer in die Lage versetzt, die Interpretierbarkeit und Leistung des Systems präzise zu steuern, ohne ein breites Verständnis der verschiedenen KI-Systeme und des bei durch sie implizit abgebildeten Kompromisses zwischen Interpretierbarkeit und prädiktiver Leistung zu benötigen. Die Genauigkeit rein datenbasiertes Systeme beizubehalten und gleichzeitig ein höheres Maß an Kontrolle und Vertrauen zu gewinnen, hat ein hohes Potenzial, den Weg für die Anwendung von ML für Anwendungen zu ebnen, die derzeit noch mit herkömmlichen Ansätzen gelöst werden

Bezugszeichenliste:

| | |
|---|---|
| 1 | Übersicht mit Methode |
| 11 | Lageraussenring |
| 111 | Defekt |
| 12 | Vibrationssensor |
| 13 | Trainingsdaten |
| 15 | Frequenzspektrum für Defektfrequenzband |
| 16 | Expertenregel |
| 17 | Erklärungsschnittstelle, HMI |
| 18 | Wartungsplanung für Lager |
| 2 | Methodenschema |
| 21 | Expertenheuristik |
| 22 | weitere Regeln |
| 23 | Expertensystem |
| 24 | Sammlung an Expertenregeln |
| 25 | Hyperparameter |
| 251, 252 | Regler |
| 26 | rein datenbasiertes System |

| | |
|---|---|
| 27 | resultierendes System |
| 28 | Regelgenerator |
| 29 | Gewichtung Ziele |
| 3 | Beispieldarstellung |
| 31 | Start-Regel $g_0$ |
| 32, 35, 38 | Regelintegration in System |
| 33, 36 | Extraktion von Datensatz zur Regelermittlung |
| 34 | 2. Regel |
| 37 | 3. Regel |
| ML1, 2, 3 | Systemausprägung nach Initialschritt und Integration 1, 2 |
| 4 | Prozess zur Ermittlung neuer Regeln und der iterativen datengetriebenen Anpassung des Gesamtsystems |
| 41 | Ermittlung nicht abgedeckter Regionen |
| 42 | Entscheidung: Annehmen, Ablehnen, Anpassen |
| 43 | Regelmenge $G_{k+1}$ |
| 45 | Prädiktionsergebnis |
| 46 | Zuweisungsmodell |

**Patentansprüche**

1. System (4) zur Durchführung einer Gesamtvorhersage für ein technisches System (11), basierend auf Daten des technischen Systems, mit

    - einem ersten, datenbasiertes System (26), geeignet und trainiert zur Durchführung einer datenbasierten Vorhersage für das technische System (11), und mit
    - einem zweiten, regelbasierten System zur Durchführung von weiteren regelbasierten Vorhersagen für das technische System (11), aufweisend einen Speicher (24) zur Ablage von für die Durchführung der weiterenregelbasierten Vorhersagen für das regelbasierte System vorhandenen Expertenwissens, **gekennzeichnet durch**
    - eine Zuweisungsmodell (46) geeignet zur Erstellung eine Gesamtvorhersage, basierend auf der ersten Vorhersage und der regelbasierten Vorhersagen, wobei

    Die Zuweisungsmodell zur Ermittlung der Gesamtvorhersage eine Gewichtung durchführt, wobei der Einfluss der Vorhersage des datenbasierten Systems an der Gesamtvorhersage minimiert wird, wobei ein Wert für die prädiktive Performanz nicht unterschritten werden darf.

2. System (4) gemäß Patentanspruch 1,
    **dadurch gekennzeichnet, dass**
    das erste, datenbasierte System (26) ein Maschinenlern-Modell umfasst, welches mit Trainingsdaten (13) trainiert ist.

3. System (4) gemäß Patentanspruch 1 oder 2,
    **dadurch gekennzeichnet, dass**
    eine Ausgabevorrichtung (17, 18) vorgesehen ist, zur Ausgabe des Ergebnisses der Gesamtvorhersage, insbesondere mit Angabe des in der Vorhersage verwendeten Expertenwissens.

4. System (4) gemäß einem der vorherigen Patentansprüche,
    **dadurch gekennzeichnet, dass**
    eine Initialisierung des Systems (4) mit Expertenwissen erfolgt, durch Startregeln (Seed Rule), mit Vorwissen zur Aufgabe.

5. System (4) gemäß einem der vorherigen Patentansprüche,
    **dadurch gekennzeichnet,
    dass**

    nach Erstellen einer Vorhersage nicht durch vorhandene Regeln abgedeckte Bereiche des Eingaberaums aufgefunden werden (41), und neue Regeln mittels einer Regelfindungsprozedur (28) erzeugt werden, und dem System hinzugefügt werden.

6. System (4) gemäß Patentanspruch 5,
    **dadurch gekennzeichnet,
    dass** der Regelfindungsalgorithmus durch einen ausreichend flachen Entscheidungsbaum realisiert wird, um eine Interpertierbarkeit der gefundenen Regeln sicherzustellen.

7. System (4) gemäß einem der vorherigen Patentansprüche,
    **dadurch gekennzeichnet, dass**
    der Regelgenerator (28) iterativ eine Anpassung des Regelsatzes (2. Rule, 3. Rule) durch Training durchführt (ML1, ML2, ML3), basierend auf den Eingangsdaten und den vorhandenen Vorhersagen bisheriger im System befindlicher Regeln, wobei die Regeln dem Regelsatz des Gesamtsystems hinzugefügt werden.

8. System (4) gemäß Patentanspruch 7,
    **dadurch gekennzeichnet, dass**
    ein Abbruchkriterium für die Anpassung des Regelsatzes und Optimierung des Gesamtsystems zumindest eines der folgenden ist:

    - die durch die neue Regel abgedeckte Anzahl an Datenpunkten ein Mindestmaß unterschreitet
    - eine zuvor festgelegte maximale Anzahl Iterationen wurde durchlaufen,
    - der Regelermittlungsalgorithmus konvergiert nicht zu einer interpretierbaren Regel.

9. System (4) gemäß einem der vorherigen Patentansprüche,
**dadurch gekennzeichnet, dass**
das technische System (11) ein Lager ist, und von einem Sensor (12) geeignete Messwerte zur Überwachung aufgezeichnet und an das System zur Auswertung übermittelt werden.

10. . Computerimplementiertes Verfahren zur Durchführung einer Gesamtvorhersage für ein technisches System (11), basierend auf Daten des technischen Systems, mit

      - einem ersten, datenbasierten Algorithmus, zur Ausführung auf einem datenbasierten System (26), welches trainiert ist zur Erstellung einer datenbasierten Vorhersage für das technische System (11), und mit
      - einem zweiten, regelbasierten Algorithmus zur Erstellung einer regelbasierten Vorhersage für das technische System (11), aufweisend für die Durchführung regelbasierten Vorhersage auf einem regelbasierten System vorhandenen Expertenwissens,
      **gekennzeichnet durch**
      - eine Gesamtvorhersage, die erstellt wird, basierend auf der datenbasierten Vorhersage und der regelbasierten Vorhersagen, wobei eine Bewerterfunktion zur Ermittlung der Gesamtvorhersage eine Gewichtung durchführt, wobei der Anteil der regelbasierten Vorhersage an der Gesamtvorhersage maximiert wird, und ein Wert für die prädiktive Performanz nicht unterschritten werden darf.

11. Verfahren (4) gemäß Patentanspruch 10,
**dadurch gekennzeichnet, dass**
das Verfahren iterativ durchgeführt wird und das MaschinenLern Modellauf dem ersten, datenbasierten System (26), mit Trainingsdaten (13) und Vorhersagedaten aus vorhergehenden Durchläufen trainiert ist, und die Regeln dem Regelsatz des Gesamtsystems hinzugefügt werden.

12. Verfahren (4) gemäß Patentanspruch 10 oder 11,
**dadurch gekennzeichnet, dass**
eine Ausgabe (17, 18) des Ergebnisses der Gesamtvorhersage vorgesehen ist, insbesondere mit Angabe des in der Vorhersage jeweils verwendeten Expertenwissens und

      - ein Hinweis auf Basis der Gesamtvorhersage auf einen vorbestimmten Zustand des beobachteten Systems oder
      - eine Eingabe für ein Wartungsplanungssystem generiert wird.

13. Verfahren (4) gemäß einem der Patentansprüche 10 - 12,
**dadurch gekennzeichnet, dass**
in einem ersten Schritt das Systems (4) mit Expertenwissen initialisiert wird, durch Startregeln (Seed Rule) umfassend vorhandenes Vorwissen zur Vorhersage.

14. Verfahren (4) gemäß einem der Patentansprüche 10 - 13, **dadurch gekennzeichnet, dass** nach Erstellen einer Vorhersage Bereiche des Eingaberaums aufgefunden werden (41) welche nicht durch vorhandene Regeln abgedeckt sind, und neue Regeln mittels einer Regelfindungsprozedur (28) erzeugt werden, und dem System hinzugefügt werden.

15. Verfahren (4) gemäß Patentanspruch 14,
**dadurch gekennzeichnet,**
**dass** der Regelfindungsalgorithmus durch einen ausreichend flachen Entscheidungsbaum realisiert wird, um eine Interpertierbarkeit der gefundenen Regeln sicherzustellen.

16. Verfahren (4) gemäß einem der Patentansprüche 10 - 15,
**dadurch gekennzeichnet, dass**
der Regelgenerator (28) iterativ eine Anpassung des Regelsatzes (2. Rule, 3. Rule) durch Training durchführt (ML1, ML2, ML3), basierend auf den Eingangsdaten und den vorhandenen Vorhersagen bisheriger im System befindlicher Regeln, wobei die Regeln dem Regelsatz des Gesamtsystems hinzugefügt werden.

17. Verfahren (4) gemäß Patentanspruch 15,
**dadurch gekennzeichnet, dass**
das Abbruchkriterium für die Anpassung des Regelsatzes und Optimierung des Gesamtsystems zumindest eines der folgenden Bedingungen ist:

      - die durch die neue Regel abgedeckte Anzahl an Datenpunkten ein Mindestmaß unterschreitet,
      - eine zuvor festgelegte maximale Anzahl Iterationen wurde durchlaufen,
      - der Regelermittlungsalgorithmus konvergiert nicht zu einer interpretierbaren Regel.

18. Verfahren (4) gemäß einem der Patentansprüche 10 bis 17,
**dadurch gekennzeichnet, dass**
das technische System (11) zur Überwachung ein Lager ist, und von einem Sensor (12) geeignete Messwerte zur Überwachung aufzeichnet und an das System zur Auswertung übermittelt.

19. Computerprogrammprodukt zur Durchführung der Schritte des Verfahrens gemäß einer der Patentansprüche 10 bis 18.

FIG 1

FIG 2

FIG 3

EP 4 455 941 A1

FIG 4

$D_k$ ——13

Determine
Uncovered
Regions ——41

4

28—— Rule
Generator

46

Gating
Function
$p_\omega$

45—— Solution
$\hat{y}$

k ——
k+1 ············

42—— Reject,
Adapt,
or Accept

26

Machine
Learning Model
$f_\theta$

31

Seed Rule
$g_0$

· · ·

34

Rule
$g_k$

37

Rule
$g_{k+1}$

43—— Rule Set
$G_{k+1}$

Europäisches Patentamt
European Patent Office
Office européen des brevets

# EUROPÄISCHER RECHERCHENBERICHT

Nummer der Anmeldung

EP 23 17 0119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MELANIE F PRADIER ET AL: "Preferential Mixture-of-Experts: Interpretable Models that Rely on Human Expertise as much as Possible", ARXIV.ORG, CORNELL UNIVERSITY LIBRARY, 201 OLIN LIBRARY CORNELL UNIVERSITY ITHACA, NY 14853, 13. Januar 2021 (2021-01-13), XP081858836, * das ganze Dokument * | 1-19 | INV. G06N3/0464 G06N5/025 G06N5/045 G06N20/20 |
| A | Wang Tong: "Gaining Free or Low-Cost Transparency with Interpretable Partial Substitute", , 12. Februar 2018 (2018-02-12), Seiten 1-10, XP093081039, DOI: 10.48550/arxiv.1802.04346 Gefunden im Internet: URL:https://proceedings.mlr.press/v97/wang19a/wang19a.pdf [gefunden am 2023-09-12] * das ganze Dokument * | 1-19 | |
| A | SHARMA RAJAT ET AL: "MAIRE — A Model-Agnostic Interpretable Rule Extraction Procedure for Explaining Classifiers", 28. Februar 2020 (2020-02-28), TOPICS IN CRYPTOLOGY — CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 329 — 349, XP047605064, * das ganze Dokument * | 1-19 | RECHERCHIERTE SACHGEBIETE (IPC) G06N |

-/--

Der vorliegende Recherchenbericht wurde für alle Patentansprüche erstellt

| Recherchenort | Abschlußdatum der Recherche | Prüfer |
|---|---|---|
| Den Haag | 9. Oktober 2023 | Moro Pérez, Gonzalo |

EPO FORM 1503 03.82 (P04C03)

Seite 1 von 2

Europäisches
Patentamt

European
Patent Office

Office européen
des brevets

**EUROPÄISCHER RECHERCHENBERICHT**

Nummer der Anmeldung

EP 23 17 0119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BRUGGENJURGEN SIMEON ET AL: "Mixture of Decision Trees for Interpretable Machine Learning", 2022 21ST IEEE INTERNATIONAL CONFERENCE ON MACHINE LEARNING AND APPLICATIONS (ICMLA), IEEE, 12. Dezember 2022 (2022-12-12), Seiten 1175-1182, XP034314147, DOI: 10.1109/ICMLA55696.2022.00190 [gefunden am 2023-03-24] * das ganze Dokument * ----- | 1-19 | |
| A | VASIC MARKO ET AL: "MoËT: Mixture of Expert Trees and its application to verifiable reinforcement learning", NEURAL NETWORKS, ELSEVIER SCIENCE PUBLISHERS, BARKING, GB, Bd. 151, 23. März 2022 (2022-03-23), Seiten 34-47, XP087046495, ISSN: 0893-6080, DOI: 10.1016/J.NEUNET.2022.03.022 [gefunden am 2022-03-23] * das ganze Dokument * ----- | 1-19 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 9. Oktober 2023 | Moro Pérez, Gonzalo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)